# EUROPÄISCHE PATENTSCHRIFT

(11) **EP 0 931 778 B1**
(45) Veröffentlichungstag und Bekanntmachung des Hinweises auf die Patenterteilung: **10.04.2002**
(21) Anmeldenummer: 98100107.6
(22) Anmeldetag: 07.01.1998
(51) Int. Cl.: C04B 28/26, C04B 28/24

(54) **Feuerfestformkörper**
Refractory article
Corps réfractaire

(43) Veröffentlichungstag der Anmeldung: 28.07.1999
(73) Patentinhaber: VIESSMANN WERKE GmbH & CO., 35107 Allendorf/Eder (DE)
(72) Erfinder: Strobl, Uwe, 35075 Gladenbach (DE); Guthardt, Harry, 35066 Frankenberg (DE)
(74) Vertreter: Wolf, Günter, Dipl.-Ing.

(56) Entgegenhaltungen:
- EP-A- 0 723 945
- DE-A- 19 627 961
- GB-A- 1 499 804
- GB-A- 2 041 384
- CHEMICAL ABSTRACTS, vol. 112, no. 20, 14.Mai 1990 Columbus, Ohio, US; abstract no. 184898j, XP000064972 & PL 136 546 A (POLITECHNIKA POZNANSKA ET AL)

## Beschreibung

Die Erfindung betrifft Feuerfestformkörper, insbesondere für Brennraum- und Brennkammerböden von Heizkesseln, bestehend aus einem mit hochtemperaturbeständigem Bindemittel verpreßten Korpus aus Partikeln auf mineralischer Basis.

Für solche Formkörper und insbesondere für den Einsatz im Heizungsbereich wurden bisher im wesentlichen Keramikfaser-Formteile verwendet, die für Temperaturbelastungen bis ca. 1.260° C verwendet werden können, jedoch den Nachteil haben, daß sie durch ihre "lungengängigen" Fasern als gesundheitsschädlich zu betrachten sind. Soweit bekannt, sind Bemühungen, Ersatzstoffe für die Keramikfasern zu finden, gescheitert. Auch die Verwendung von Vermiculite-Material gemäß DE-A-37 00 478 und DE-A-44 21 321 ist zumindest für den speziellen Einsatzbereich in Heizkesseln "Papier geblieben". Danach ist im ersten Fall vorgesehen, zwischen zwei Außenschichten aus Vermiculite-Material einen feuerfesten Füllkörper mit höherem Wärmeisolierwert als Vermiculite anzuordnen, und im zweiten Fall, d.h. der DE-A-44 21 321, in gleichmäßiger Verteilung hochtemperaturbeständige Granulate oder Körner (bspw. Hohlkugelkorund, Korund) mit Schmelzpunkten über 1.200°C einzulagern, dies aber nur im flammbeaufschlagten Bereich von Vermiculite-Pormstücken, d.h., im wesentlichen in der Oberfläche bzw. in der die Oberfläche bildenden Schicht. Tatsächlich hat sich aber gezeigt, daß trotz dieser speziellen Ausbildungsvorgaben derartige Formkörper früher oder später rissig werden, und zwar im Falle der DE-A-44 21 321, die im übrigen bzgl. der prozentualen Komponentenanteile alles offenläßt, vermutlich deshalb, weil der wesentliche Teil dieser Formkörper aus Vermiculite-Material besteht, offenbar ausgehend von der Vorstellung, daß eine gute Wärmedämmung vermeintlich einen hohen Anteil von Vermiculite-Material im Formkörper verlangt, und zwar geleitet von der Vorgabe gemäß DE-A- 37 00 478, die noch zwischen äußeren Vermiculite-Beschichtungen einen massiven Wärmedämmkörper als notwendig erachtete.

Der Erfindung liegt die Aufgabe zugrunde, als Ersatz für an sich sowohl feuerfeste, gut wärmedämmende als auch gut zu Formkörpern verarbeitbare, aber aus gesundheitlichen Gründen inzwischen zu vermeidende Keramikfasern zur Ausbildung solcher Formteile eine Zusammensetzung zu finden, die sich nicht nur komplikationslos in vergleichsweise einfacher Art wie die bisherigen Keramikfaserformteile verarbeiten läßt, sondern die auch eine ausreichend hohe Temperaturbelastbarkeit hat und die insbesondere tatsächlich auch rißbeständig ist.

Diese Aufgabe ist nach der Erfindung mit einem Feuerfestformkörper mit den Merkmalen des Anspruchs 1 gelöst.

Im Gegensatz zu den Vermiculit-Formteilen nach der DE-A-44 21 321, die also im wesentlichen aus Vermiculiten bestehen und dazu materialunterschiedliche Granulate nur im flammbeaufschlagten Teil enthalten, ist also beim erfindungsgemäßen Korpus, der sich als Brennraum- und Brennkammerboden in Heizkesseln und bei den dortigen Temperaturbelastungen als absolut rißbeständig erwiesen hat, der Vermiculite-Anteil, der hier aufgrund seiner Anteilsreduzierung praktisch nur als "Armierung" der Formteile dient, gezielt ganz wesentlich zurückgenommen, wobei die Hohlkügelchen als sogenannte Extendospheres den wesentlich größeren Anteil im Feuerfestformkörper bilden. D.h. bei den erfindungsgemäßen Formkörpern, die also aufgrund ihres relativ geringen Vermiculite-Anteiles nicht mehr als Vermiculit-Formkörper gemäß DE-A-44 21 321 bezeichnet werden können, handelt es sich nicht mehr um solche, die im wesentlichen aus Vermiculite bestehen, sondern um Formkörper, die einen relativ geringen Anteil an Vermiculite-Partikeln enthalten, die im aus den sogenannten Extendospheres gebildeten Hauptbestandteil eingelagert sind, und zwar hier und im Gegensatz zu den Formteilen nach der DE-A-44 21 321 in homogener Verteilung. Dies erleichtert die Herstellung der erfindungsgemäßen Formkörper im Gegensatz zu Feuerfestformkörpern gemäß DE-A-37 00 478 wesentlich, da dort die Vermiculite-Partikelchen nur in den Außenschichten vorhanden sein sollen, was nachteilig bei der Herstellung eine Schichteinbringung in entsprechende Herstellungsformen verlangt. Eine solche nachteilige Schichteinbringung ist übrigens auch bei den Formkörpern nach der DE-A-44 21 321 erforderlich, um der dortigen Forderung der Granulateinlage nur im Oberflächenbereich genügen zu können.

Als Extendospheres werden nach der vorliegenden Erfindung bevorzugt solche aus Aluminiumsilikat verwendet. Solche Extendospheres haben im Gegensatz zu bspw. Hohlkugelkorund eine wesentlich geringere Wärmeleitfähigkeit (Korund ca. 25 - 30 W/mk, Extendospheres aus Aluminiumsilikat nur ca. 2 - 3 W/mk).

Bei den Feuerfestformkörpern nach der vorerwähnten DE-A-44 21 321 sind, wie erwähnt, zwar auch schon Hohlkügelchen in Form von Hohlkugelkorund als Einlagerungsgranulat im Vermiculite-Material in Betracht gezogen, das aber wegen seiner hohen Wärmedämmeigenschaften in diesem Falle den tragenden Grundbestandteil solcher Formkörper bildet. Im Gegensatz dazu ist, wie vorerwähnt, im vorliegenden Fall erfindungsgemäß gezielt auf einen solch hohen Vermiculite-Anteil verzichtet, und es ist stattdessen für eine homogene Verteilung aller Komponenten im Formkörper gesorgt.

Als hochtemperaturbeständiges Bindemittel wird vorzugsweise ein Kaliwasserglasbinder verwendet, da normales Natronwasserglas nur eine Temperaturbeständigkeit bis ca. 800° C hat.

Eine vorteilhafte Weiterbildung besteht darin, daß bei entsprechend anteilsgleicher Reduzierung der Gew.-%-Anteile der drei obengenannten Komponenten, d.h. Vermiculite, Extendospheres und Bindemittel, im Formkörper Wollastonit-Fasern in der Größenordnung von 10-20 Gew.-% enthalten sind. Dadurch ist eine bessere Kantenstabilität und insgesamt höhere Festigkeit des jeweiligen Formkörpers erreichbar, wobei die Wollastonit-Fasern praktisch eine eingelagerte Armierung für den betreffenden Formkörper darstellen.

Mit der gleichen Maßgabe entsprechend anteilsgleicher Reduzierung der drei bzw. vier Komponenten (wenn Wollastonit-Fasern mit vorhanden sind) im Korpus hat sich die Zugabe von Bentonit-Bindeton in der Größenordnung von 10 % als vorteilhaft erwiesen, und zwar hinsichtlich einer wesentlich erhöhten "Grünfestigkeit" der noch nicht getrockneten Formteile.

Bezüglich der durch die erfindungsgemäße Zusammensetzung erreichbaren Rißbeständigkeit kann nur vermutet werden, daß diese ihren Grund im relativ hohen Anteil der homogen verteilten Extendospheres hat, die offenbar aufgrund ihres geringen Dehnungs- und Schwindungsverhalten dem Formkörper eine höhere Widerstandsfähigkeit gegen Rißbildung vermitteln, welche vermutlich auch dadurch bedingt ist, daß aufgrund homogener, keine Schichtung bei der Herstellung erfordernden Verteilung aller Komponenten im Formkörper keine Zonen bzw. Schichten unterschiedlicher Zusammensetzung vorliegen.

Dies findet sich auch dadurch bestätigt, daß die gestellte Aufgabe erfindungsgemäß unter Verzicht auf die Verwendung von Vermiculite-Material auch durch einen Feuerfestformkörper mit den Merkmalen des Anspruchs 6 gelöst ist.
Wie sich überraschenderweise herausgestellt hat, sind bei einer derartigen Zusammensetzung Temperaturbelastungen ohne Rißgefahr sogar zwischen 1.200°C und 1.300°C möglich, während die Grenztemperaturbelastungen bei Formkörpern mit Vermiculite-Anteil nach obigen Maßgaben bei 1.100°C liegen.
Diese hohe Temperaturbelastbarkeit bis 1.300°C hat ihren Grund in der höheren Temperaturbeständigkeit des Kieselsäuresols im Vergleich zum Kaliwasserglas, wobei erfindungsgemäß die vergleichsweise zu Kaliwasserglas geringere Bindefähigkeit durch die Zugabe von Bentonit ausgeglichen wird.

Die Formkörper, die zwar insbesondere zur Ausbildung von Brennraum- und Brennkammerböden bestimmt sind, bspw. aber auch als entsprechend angepaßte Formkörper für die Isolierung von Heizkesseltüren in Betracht gezogen werden können, werden in Formen mit geeigneten Preßeinrichtungen im Naßzustand verpreßt, und zwar mit einem Preßdruck, der zu einer Dichte von ca. 400 - 450 kg/m3 führt, die den Formkörpern die günstigsten Eigenschaften bei den angegebenen Temperaturgrenzbelastungen vermittelt.

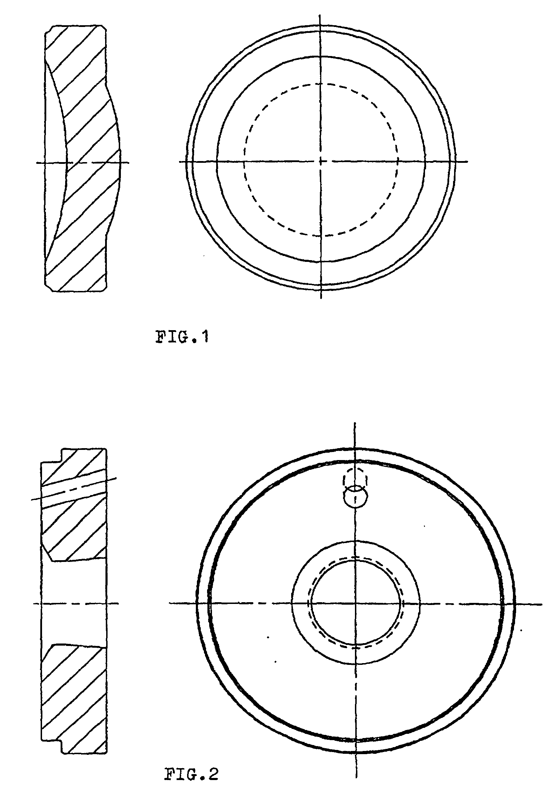

In den Fig. 1 und 2 sind nur der Vollständigkeit halber im Schnitt und in Ansicht typische Formen für solche Feuerfestformkörper als Einsatzböden von Brennkammern bzw. Brennräumen (Fig. 1) und als Isolationseinsätze von Heizkesselverschlüssen(Fig. 2) lediglich als Ausführungsbeispiele dargestellt, d.h., die beschriebenen und beanspruchten Materialzusammensetzungen können als Formkörper je nach den konstruktiven Gegebenheiten auch andere geometrische Formen haben oder bspw. auch aus mehreren Segmenten zusammengesetzt sein.

## Patentansprüche

1. Feuerfestformkörper, insbesondere für Brennraum- und Brennkammerböden von Heizkesseln, bestehend aus einem mit hochtemperaturbeständigem Bindemittel verpreßten Korpus aus Partikeln auf mineralischer Basis,
wobei
die Partikel auf mineralischer Basis in bekannter Weise Vermiculite-Partikel und diese in der Größenordnung von 20-30 Gew.-% im Gesamtkorpus zusammen mit keramischen Hohlkügelchen als sogenannte Extendospheres in der Größenordnung von 40-50 Gew.-% enthalten sind, der Rest aus dem hochtemperaturbeständigen Bindemittel besteht und alle drei Komponenten in homogener Verteilung im Korpus vorliegen.

2. Feuerfestformkörper nach Anspruch 1,
**dadurch gekennzeichnet**
**daß** die Hohlkügelchen aus Aluminiumsilikat bestehen.

3. Feuerfestformkörper nach Anspruch 1 oder 2,
**dadurch gekennzeichnet**
**daß** das Bindemittel ein Kaliwasserglasbinder ist.

4. Feuerfestformkörper nach einem der Ansprüche 1 bis 3,
**dadurch gekennzeichnet,**
**daß** bei entsprechend anteilsgleicher Reduzierung der Gew.-%-Anteile der drei Komponenten, nämlich Vermiculite, keramische Hohlkügelchen und Bindemittel, im Korpus Wollastonit-Fasern in der Größenordnung von 10-20 Gew.-% enthalten sind.

5. Feuerfestformkörper nach einem der Ansprüche 1 bis 4,
**dadurch gekennzeichnet,**
**daß** bei entsprechend anteilsgleicher Reduzierung der drei oder vier Komponenten im Korpus Bentonit-Bindeton in der Größenordnung von 10% enthalten ist.

6. Feuerfestformkörper, insbesondere für Brennraum- und Brennkammerböden von Heizkesseln, bestehend aus einem mit hochtemperaturbeständigem Bindemittel verpreßten Korpus aus Partikeln auf mineralischer Basis,
wobei
im Korpus Extendospheres, Wollastonit-Fasern, Bentonit und Kieselsäuresol mit im wesentlichen gleichen Volumenanteilen und in homogener Verteilung enthalten sind.

7. Feuerfestformkörper nach einem der Ansprüche 1 bis 6,
**dadurch gekennzeichnet,**
**daß** die verpreßten Formkörper eine Dichte von im wesentlichen 400 - 450 kg/m3 aufweisen.

## Claims

1. A shaped body of refractory material, in particular intended for making bottoms of combustion chambers or spaces of boilers, comprising a corpus of particles on mineralic basis compressed with a high temperature-resistant binder, wherein the particles on mineralic basis, in known manner, contain vermiculite particles in the order of between 20 and 30 percent by weight within the entire corpus together with ceramic hollow balls forming so-called extendospheres in the order of between 40 and 50 percent by weight while the remainder is composed of the high temperature-resistant binder, and wherein all three components are homogeneously distributed within the corpus.

2. A shaped body of refractory material according to claim 1, **characterized in that** the hollow balls are made of aluminum silicate.

3. A shaped body of refractory material according to claims 1 or 2, **characterized in that** the binder is a potash water glass binder.

4. A shaped body of refractory material according to any one of claims 1 to 3,
**characterized in that**, while reducing the percent-by-weight shares of the three components, namely vermiculite, ceramic hollow balls and binder, in correspondingly equal shares, wollastonite fibers in the order of between 10 and 20 percent by weight are contained in the corpus.

5. A shaped body of refractory material according to any one of claims 1 to 4, **characterized in that**, while reducing the three or four components in equal shares, bentonite binder clay in the order of 10% is contained in the corpus.

6. A shaped body of refractory material, in particular for use with bottoms for combustion spaces or chamber of boilers, comprising a corpus of particles on a mineralic basis compressed with a high temperature-resistant binder, wherein extendospheres, wollastonite fibers, bentonite and silicic acid sol are contained in the corpus in substantially equal volume shares and in homogeneous distribution.

7. A shaped body of refractory material according to any one of claims 1 to 6, **characterized in that** the compressed shaped bodies are of a density substantially in the range of between 400 and 450 kg/m3.

## Revendications

1. Corps moulé réfractaire, en particulier pour fonds de chambre de chauffe et de chambres de combustion de chaudières de chauffage, constitué par un corps en particules à base minérale pressé avec un liant à haute résistance thermique,
les particules à base minérale étant de manière connue des particules de vermiculite et celles-ci étant contenues de l'ordre de 20 à 30% en poids dans le corps total avec des petites sphères creuses céramiques comme ce qu'il est convenu d'appeler des extendosphères de l'ordre de 40 à 50% en poids, le reste étant constitué de liant résistant aux températures élevées et toutes les trois composantes étant présentes en répartition homogène dans le corps.

2. Corps moulé réfractaire selon la revendication 1,
**caractérisé en ce**
**que** les petites sphères creuses sont en silicate d'aluminium.

3. Corps moulé réfractaire selon la revendication 1 ou 2,
**caractérisé en ce**
**que** le liant est un liant au verre soluble de potasse.

4. Corps moulé réfractaire selon l'une des revendications 1 à 3,
**caractérisé en ce**
**que**, pour une réduction correspondante égale en taux des pourcentages en poids des trois composantes, à savoir la vermiculite, les petites sphères céramiques et le liant, des fibres de wollastonite de l'ordre de grandeur de 10 à 20 % en poids sont contenues dans le corps.

5. Corps moulé réfractaire selon l'une des revendications 1 à 4,
**caractérisé en ce**
**que**, pour une réduction correspondante égale en taux des pourcentage des trois ou quatre composantes de l'argile de liaison/bentonite de l'ordre de 10 % est contenue dans le corps.

6. Corps moulé réfractaire, en particulier pour fonds de chambre de chauffe et de chambres de combustion de chaudières de chauffage, constitué par un corps en particules à base minérale pressé avec un liant à haute résistance thermique,
des extendosphères, des fibres de wollastonite, de la bentonite et du sol au silicate sont contenus en taux de volume substantiellement égaux et en répartition homogène dans le corps.

7. Corps moulé réfractaire selon l'une des revendications 1 à 6,
**caractérisé en ce**
**que** les corps moulés pressés présentent une densité de substantiellement 400 à 450 kg/m³.
